# EUROPEAN PATENT APPLICATION

(11) **EP 4 668 116 A1**
(43) Date of publication of application: **24.12.2025**
(21) Application number: 25184050.0
(22) Date of filing: 19.06.2025
(51) Int. Cl.: G06F 9/54, G06F 40/40, H04L 67/2871, G06F 21/62

(54) **SYSTEMS AND METHODS FOR ENHANCED APPLICATION INTERACTIONS**

(30) Priority: 20.06.2024 US 202463662164 P; 18.06.2025 US 202519242147
(71) Applicant: JPMorgan Chase Bank, N.A., New York, NY 10179 (US)
(72) Inventor: HAUS, Gill, New York, 10179 (US); SPECTOR, Howard, New York, 10179 (US)
(74) Representative: Patentanwälte Olbricht Buchhold Keulertz

(57) **Abstract**

Systems and methods for enhanced application interactions are disclosed. In one embodiment, a method may include: receiving, by a common process, state information for a first application from the first application executed by an electronic device; storing, by the common process, the state information; receiving, by the common process and from a second application executed by the electronic device, a request for the state information; and providing, by the common process, the state information to the second application.

## Description

### RELATED APPLICATIONS

This application claims priority to, and the benefit of, U.S. Provisional Patent Application Ser. No. 63/662,164, filed June 20, 2024, the disclosure of which is hereby incorporated, by reference, in its entirety.

### BACKGROUND OF THE INVENTION

### 1. Field of the Invention

Embodiments relate to systems and methods for enhanced application interactions.

### 2. Description of the Related Art

It is common for a user of an electronic device to switch back and forth between computer programs or applications. Sometimes, however, a user wants to use information from one application with another. This requires tedious cutting-and-pasting, screenshots, or manual transfer of the information.

### SUMMARY OF THE INVENTION

Systems and methods for enhanced application interactions are disclosed. In one embodiment, a method may include: receiving, by a common process, state information for a first application from the first application executed by an electronic device; storing, by the common process, the state information; receiving, by the common process and from a second application executed by the electronic device, a request for the state information; and providing, by the common process, the state information to the second application.

In one embodiment, the state information may include information that was last being displayed or accessed by the first application.

In one embodiment, the first application pushes the state information to the common process.

In one embodiment, the common process pulls the state information from the first application.

In one embodiment, the state information may be encrypted with a public key for the common process, further comprising: decrypting, by the common process, the state information with a public key for the common process; and encrypting, by the common process, the state information with a public key for the second application.

In one embodiment, the common process may be executed on the electronic device.

In one embodiment, the common process may include an interaction service executed in a cloud environment.

In one embodiment, the common process executes a Model Context Protocol (MCP) agent in communication with a MCP server.

In one embodiment, the common process may include a recommender system, and the method may also include prompting, by the recommender system, a large language model with the state information for a recommendation. The state information provided to the second application may include the recommendation.

In one embodiment, the state information may include an identifier for a participant in a conference, and the method may also include retrieving, by the common process, contact information for the participant. The state information provided to the second application may include the contact information.

In one embodiment, the common process may include a cloud-based interaction service.

In one embodiment, the first application sends the state information to the common process in response to switching from the first application to the second application.

In one embodiment, the second application pulls the state information from the common process.

In one embodiment, the method may also include deleting, by the common process, the state information after the state information may be provided to the second application.

In one embodiment, the second application consumes the state information.

According to another embodiment, an electronic device may include: a computer processor; and a memory. The electronic device may be configured to execute a first application, a second application, and a common process, and the common process may be configured to receive state information for the first application from the first application, wherein the state information may include information that was last being displayed or accessed by the first application, to store the state information, to receive a request for the state information from the second application, and to provide the state information to the second application.

In one embodiment, the state information may be encrypted with a public key for the common process, and the common process may be configured to decrypt the state information with a public key for the common process and to encrypt the state information with a public key for the second application.

In one embodiment, the common process executes a Model Context Protocol (MCP) agent in communication with a MCP server.

In one embodiment, the common process may include a recommender system, and the recommender system may be configured to prompt a large language model with the state information for a recommendation, and the state information provided to the second application may include the recommendation.

### BRIEF DESCRIPTION OF THE DRAWINGS

For a more complete understanding of the present invention, the objects, and advantages thereof, reference is now made to the following descriptions taken in connection with the accompanying drawings in which:
Figure 1 illustrates a system for enhanced application interactions according to an embodiment;
Figure 2 illustrates a method for enhanced application interactions according to an embodiment;
Figure 3 illustrates a system for enhanced application interactions according to another embodiment;
Figure 4 illustrates a method for enhanced application interactions according to another embodiment;
Figure 5 illustrates a method for enhanced application interactions according to another embodiment;
Figure 6 illustrates a method for enhanced application interactions according to another embodiment;
Figure 7 illustrates a method for enhanced application interactions according to another embodiment;
Figure 8 depicts an exemplary computing system for implementing aspects of the present disclosure.

### DETAILED DESCRIPTION OF PREFERRED EMBODIMENTS

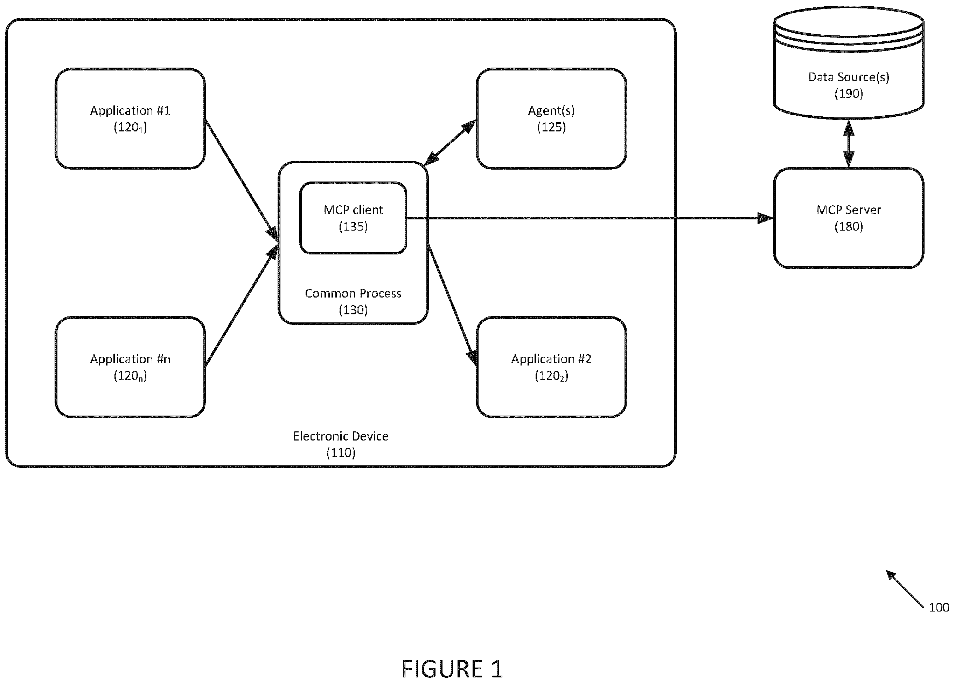

Referring to Figure 1, a system for enhanced application interactions is disclosed according to an embodiment. System 100 may include electronic device 110, which may be a computer (e.g., workstation, desktop, laptop, notebook, tablet, etc.), a smart device (e.g., smart watch, smart phone, etc.), an Internet of Things (IoT) appliance, etc. Electronic device 110 may execute a plurality of applications, such as application 120₁, 120₂, ... 120ₙ. Each application 120 may provide different functionality (e.g., one application may be a messaging application, another may be a video conference application, etc.) that may share common information (e.g., contact information).

Electronic device 110 include common process 130, which may be a database, a cache, or another application) that may temporarily store data used by applications 120 so that other applications 120 may retrieve and consume the data. For example, as the user moves from application 120₁ to application 120₂, or exits application 120₁, the action causes the application 120₁ to push data revelated to its last state to common process 130. Application 120₂ may then retrieve the data and may consume the data.

In one embodiment, the operating system may provide a set of Application Programming Interfaces (APIs) that facilitate the secure sharing of data.

In one embodiment, the data may also be stored in a secure element, or similar, on electronic device 110, or in secure cloud space (not shown) that may be provided by the manufacturer of electronic device 110.

In one embodiment, common process 130 may be a recommender system that may receive data from application 120₁ and may provide a recommendation. Examples of recommender systems include media recommendations (e.g., suggested videos, songs, books, websites, etc.) based on prior accesses. The recommender system may use, for example, a trained machine learning model or LLM to provide recommendations and/or suggestions to application 120₁ and/or application 120₂.

In another embodiment, common process 130 may include Model Context Protocol (MCP) agent 135, which may use the MCP to interface with MPC server 180. In another embodiment, an agent-to-agent protocol may be used. For example, MCP client 135 may provide MCP server 180 with a request for data from data source(s) 190 that may be external to electronic device 110. Data source(s) 190, which may include, for example, databases (internal and external to an organization), websites, document repositories, code repositories, directories, etc. Because sharing data in this manner may involve risk, the data may be encrypted before it is shared, and at rest.

The data retrieved by MCP server 180 may be returned to application 120₂ or MCP client 135, and/or it may be used to further refine the request to MPC server 180 and/or data source(s) 190.

In embodiments, one or more agent(s) 125) may leverage MCP client 135 and MCP server 180 to detect potential actions and either take them or alert the user to them. For example, agent 125 may automatically reply to emails that a LLM determines is of low importance and only needs to be acknowledged.

In one embodiment, applications 120 may access common process 130 via one or more Application Programming Interfaces (APIs).

In one embodiment, the data may be encrypted (e.g., using homomorphic encryption) and provided to a machine learning model or a large language model to provide insights without exposing the raw data.

An example of such is a user using application 120₁, such as a video conferencing application. If the user wishes to send an email to a participant using 120₂, when the user switches from the video conferencing application 120₁ to the email application 120₂, the video conferencing application 120₂ may push its current state, such as an identification of the participants, any participant contact information, a transcription of the conversation, any document shared, etc. to common process 130. Email application 120₂ may then retrieve this data, and may provide an option to send a message to one or more of the participants.

In one embodiment, common process 130 may access other data sources (e.g., address books, social networks, etc.) to retrieve contact information for the participants if it is not available.

In one embodiment, common process 130 may also provide the user with access to the data related to the state. As noted above, the data may be encrypted while at rest, in transit, and/or while in use. For example, to use data that is encrypted, a placeholder value for the encrypted data (e.g., a temporary or persistent format preserving token) may be presented to the user, and the data may be decrypted right before it is sent. This protects the recipient's privacy while still allowing the user to interact with the data.

In one embodiment, the data may be deleted as is necessary and/or desired.

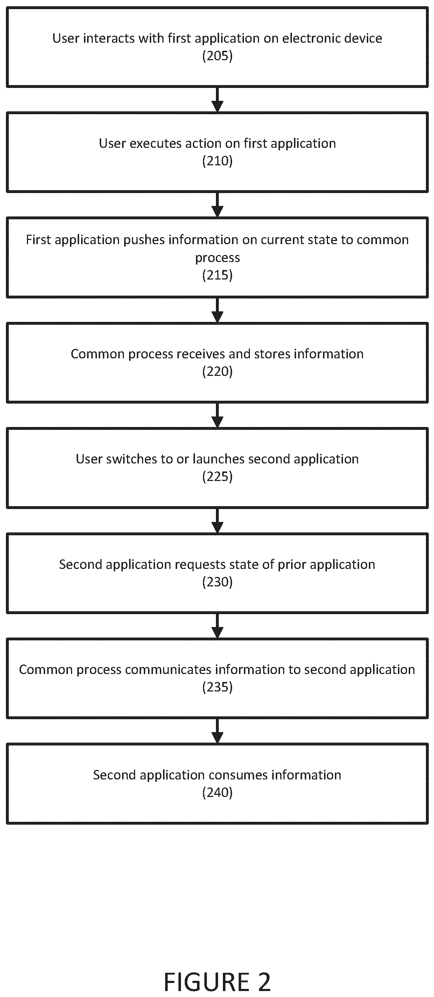

Referring to Figure 2, a method for enhanced application interactions is disclosed according to an embodiment.

In step 205, a user may interact with a first application on an electronic device.

In step 210, the user may execute an action on the first application that causes the application to communicate information on its current state to a common process in response to, for example, an event involving the first application. For example, the user may switch out of the first application, may close or exit the first application, etc.

In step 215, the first application may push the information on its current state to the common process. For example, the first application may present information that was currently being displayed or accessed by the first application, such as identifies and contact information for any participants in a video conference. In one embodiment, the data may be pushed from the first application to the common process; in another embodiment, the common process may request the data.

In one embodiment, each application may register its end points for retrieving and sending data with the common process or operating system, and any application needing data may query the registration and message the other applications for updates.

Alternatively, each application may automatically push data to the common process. The data that is pushed may be configured by the user, the applications, the operating system, etc.

In one embodiment, the first application may encrypt the information before it is sent to the common process. For example, the first application may encrypt the information with the public key for the common process.

In another embodiment, the information may be encrypted using homomorphic encryption.

In step 220, the common process may receive and store the information from the first application. In one embodiment, the information may remain encrypted while at rest.

In step 225, the user may switch to or may launch a second application also on the electronic device, and the second application may call the common process for the current state of a prior application, in this case, the first application.

In step 230, the common process may receive the request and may retrieve the information. If encrypted, the common process may decrypt the information using the common process' private key, and may encrypt the information using the public key for the second application.

In one embodiment, a MCP client executed by the LLM in the common process may identify information to retrieve from a data source, such as a website, repository, etc. The MCP client may contact a MCP server that may be located external to the electronic device, and the MCP server may retrieve the information for the common process.

In step 235, the common process may communicate the encrypted information to the second application. In one embodiment, after communicating the encrypted information, the common process may delete the information.

In step 240, the second application may decrypt the information using, for example, its private key and may consume the information.

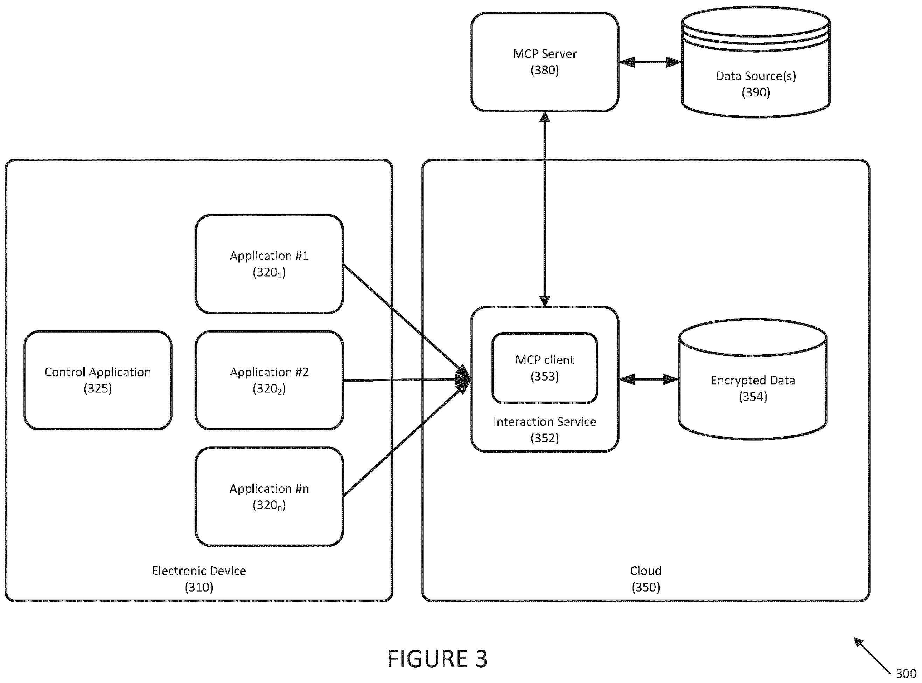

Referring to Figure 3, a system for enhanced application interactions is disclosed according to another embodiment. For example, some electronic devices limit an application's ability to communicate with other applications on the same device as a security precaution. Thus, of course, limits the ability of the applications to share their context.

To address this, embodiments may provide a method for indirect application communication. System 300 may include electronic device 310, which may be a computer (e.g., workstation, desktop, laptop, notebook, tablet, etc.), a smart device (e.g., smart watch, smart phone, etc.), an Internet of Things (IoT) appliance, etc. Electronic device 310 may execute a plurality of applications, such as application 320₁, 320₂, ... 320ₙ. Each application 320 may provide different functionality (e.g., one application may be a messaging application, another may be a video conference application, etc.) that may share common information (e.g., contact information).

Electronic device 310 may also execute control application 325 that may provide on-device access to security credentials (e.g., OAuth tokens stored in secure storage) that may be required to access interaction service 352.

In one embodiment, multiple electronic devices 310 may be provided, and different applications on the different electronic devices may share information.

System may further include cloud 350 that may execute interaction service 352. Interaction service 352 may allow for context data for applications 320 to be shared in a secure way. For example, each application 320 may optionally support integrating with interaction service 352. The user may link each application 320 to interaction service 352, and applications 320 may provide context information that can be retrieved by other applications the user has approved.

In embodiments, the linking may be performed by using web browsers, which may simplify the linking, as the browser may store the user's credentials and allow for fast linking.

In one embodiment, interaction service 352 may store the context information as encrypted data 354. The encrypted data may be temporarily stored, for example, until it is retrieved, or additional context information is stored.

In one embodiment, interaction service 352 may include MCP client 353, which may be similar to MCP client 135, MCP server 380, which may be similar to MCP server 180, and date source(s) 390. which may be similar to data sources 190.

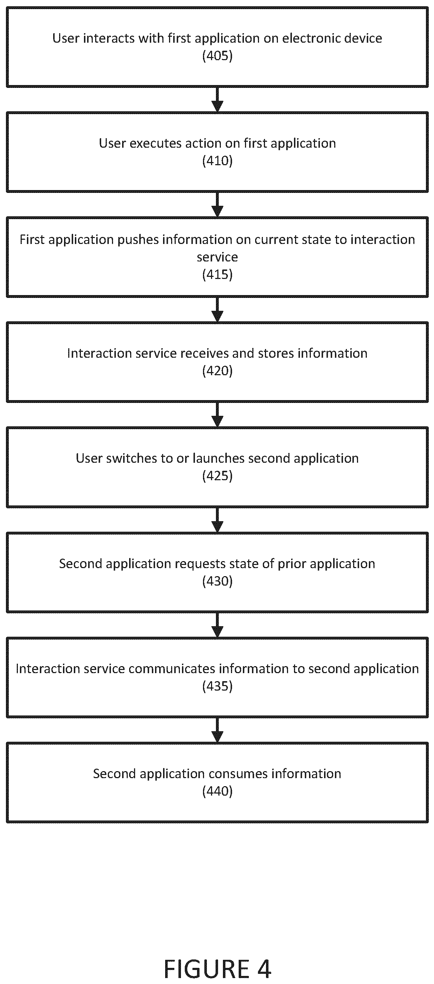

Referring to Figure 4, a method for enhanced application interactions is disclosed according to an embodiment.

In step 405, a user may interact with a first application on an electronic device.

In step 410, the user may execute an action on the first application that causes the application to communicate information on its current state to an interaction service that may be provided off-device. For example, the user may switch out of the first application, may close or exit the first application, etc.

In step 415, the first application may push the information on its current state to the interaction service. This may be similar to step 215, above.

In one embodiment, the first application may encrypt the information before it is sent to the interaction service. For example, the first application may encrypt the information with the public key for the interaction service.

In another embodiment, the information may be encrypted using homomorphic encryption.

In step 420, the interaction service may receive and store the information from the first application. In one embodiment, the information may remain encrypted while at rest.

In step 425, the user may switch to or may launch a second application also on the electronic device, and the second application may call the interaction service for the current state of a prior application, in this case, the first application. This may be similar to step 415, above.

In step 430, the interaction service may receive the request and may retrieve the information. If encrypted, the interaction service may decrypt the information using the common process' private key, and may encrypt the information using the public key for the second application.

In one embodiment, a MCP client executed by the interaction service may identify information to retrieve from a data source, such as a website, repository, etc. The MCP client may contact a MCP server that may be located external to the electronic device, and the MCP server may retrieve the information for the interaction service.

In step 435, the interaction service may communicate the encrypted information to the second application. In one embodiment, after communicating the encrypted information, the interaction service may delete the information.

In step 440, the second application may decrypt the information using, for example, its private key, and may consume the information.

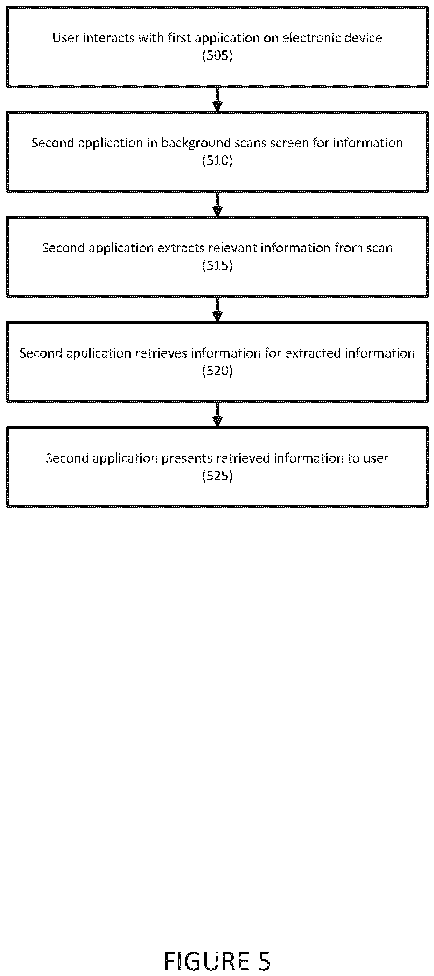

Referring to Figure 5, a method for enhanced application interaction is provided according to another embodiment. For example, an application may also scan the screen for text (e.g., a username ), and may then access another application to identify relevant information on device online about the text. This may include accessing the user's contacts, accessing the user's email application, accessing a third-party service, (e.g., LinkedIn or similar), etc., to learn more about the username and make that information available to the user.

When multiple contacts are shown, embodiments may attempt to validate all contacts shown in the current view and retrieve information about those contacts to assist with the conversation.

In one embodiment, face scanning or similar may be leveraged based on the images on the screen to help determine the authenticity of the participant against the name provided. Embodiments may perform a reverse image look up to find additional details about the participants.

An exemplary process is as follows.

In step 505, a user may interact with a first application on an electronic device.

In step 510, a second application that may be running in the background, or as part of the operating system for the electronic device, may scan the screen of the electronic device for information. In one embodiment, the user may initiate the scanning; in another embodiment, the second application may periodically scan the screen; in still another embodiment, the second application may scan the screen in response an event (e.g., a change in presenters in a video conference).

In one embodiment, the scanning may be triggered by an intent or other device interaction. For example, the scanning may be launched based on an agent determining that the first application requires the data being presented by another application.

In step 515, the second application may extract relevant information from the scan. For example, the second application may extract application information for the first application, may extract text that is being displayed, may extract facial features for images of people, etc. to extract relevant information from the scan.

In one embodiment, the second application may cover the data into text and may query a Large Language Model (LLM), with contextual information for the current actions of the user and to identify relevant information. Once this information is identified, the second application may query other applications or the operating system for additional data.

In step 520, the second application may retrieve information for the relevant information. For example, the second application may access a third application (e.g., a contact information application) and/or external data sources (e.g., social media sources) to retrieve contact information or other relevant information for people in the scan.

In one embodiment, the second application may include a MCP client, which may receive an identification of the relevant information to retrieve from a LLM-based agent. The LLM-based agent may request the relevant information from a MPC server via a MCP client. The MCP server may interface with data sources, such as database, repositories, websites, etc. The MCP client may receive the relevant information from the MCP server, and may return the relevant information to the MCP client and/or the second application.

In step 525, the second application may present the retrieved information to user (e.g., present the person's name on the screen), or it may populate an application, such as a messaging application, with the information.

In another embodiment, application extensions may be used to expose the functionality of one application to another. Modern devices are restrictive when it comes to inter application communication; thus, application extensions may be used. This allows a user in an application to invoke an extension to retrieve data from another application. For example, a messaging application may call an online meeting application using an application extension to obtain the contact information for the participants in the last meeting so that a text message to one or more of the participants may be generated.

Intent or URL redirects may allow the applications to share data and may be leveraged to enable the state of one application to be requested by another. Thus, a messaging application may fire an intent / URL to a video conference application to retrieve the contact information for participants of a video conference.

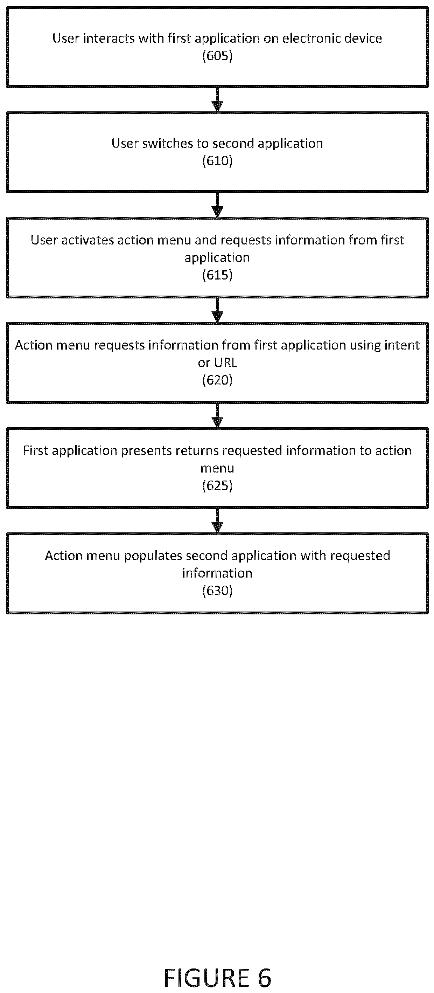

Referring to Figure 6, a method for enhanced application interaction is provided according to another embodiment.

In step 605, a user may interact with a first application on an electronic device.

In step 610, the user may switch to a second application.

In step 615, the user may activate an action menu and may request to retrieve information from the first application. For example, the user may activate the action menu using a swipe in a certain direction (e.g., an up swipe) and the action menu may present the user with options, such as retrieve contact information on screen of first application.

In step 620, the action menu may request the information from the first application using an intent or URL. This may be a standard intent or shortcut creation.

In step 625, the first application may return the requested information. For example, the first application may provide context to a LLM, which may identify fields from a standard list or registry to provide.

In another embodiment, the fields may be identified during application registration.

In step 630, the action menu may present the requested information to the user, or may use the requested information to populate the second application.

In embodiments, geofencing may also be used to trigger actions based on recent or past conversations / interactions. For example, an application may access a contact list to determine if the contacts are in the office, out of the office, online, offline, etc. in order to recommend the best time to connect with the contact in person. As another example, if a user is passing a business that was discussed in a messaging application within a certain period of time, embodiments may alert the user of the location, and may also provide the user with directions, discounts or other type of offer.

In another embodiment, an application may monitor, with user approval, user conversations and, based on the transcript of the ongoing conversation, may send events to other listening (registered / user approved) applications to stage actions for the user to approve, reject, or modify. For example, if a conversation contains "please text me that information" or something similar, embodiments may retrieve relevant information from other participating applications.

Each application may register triggers and data they can respond to, allowing the system to have a curated list of actions. Alternatively, the system may scan the installed applications to derive potential triggers and data available.

In embodiments, a mobile application may provide triggers / data in a secure fashion that may allow financial instructions to be executed. For example, embodiments may leverage funds transfer, trades, sharing payment credentials, enabling person-to-person payment transactions, etc.

In embodiments, users of virtual reality / augment reality devices may also benefit by having the ability to identify people and objects though the device. The user may use gestures, motions, a pointing device, etc. and "drag" the person's avatar/image over an icon to retrieve more about the person or object. The user may also place a person's avatar/image over the user's digital wallet icon or image on the device to initiate the peer to peer or similar type of payment.

In embodiment, two or more people sharing an AR/VR type experience may share information in this way and also invoke financial transitions. In one embodiment, the people may sign a contract by opening a virtual wallet, lockbox or similar to pull and/or generate a virtual signature that may be digitally signed before being virtually handed to the counterparty.

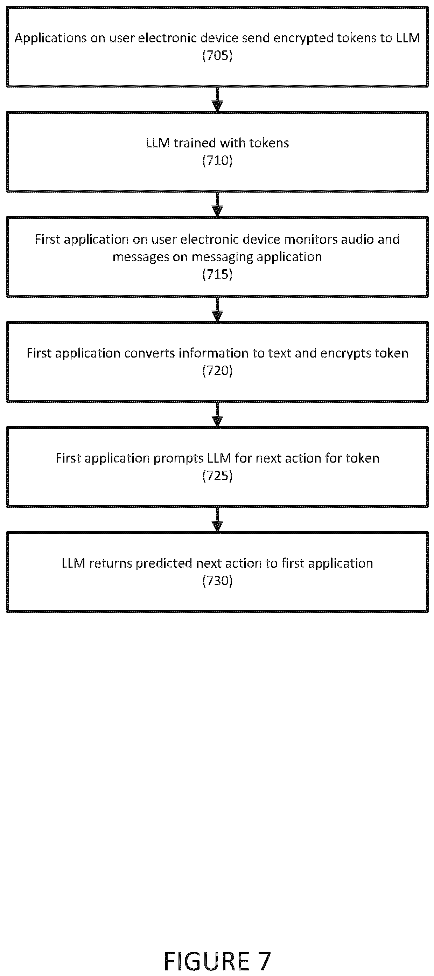

Referring to Figure 7, a method for enhanced application interactions is provided according to another embodiment. For example, a LLM, which may be on-device or remote, may provide APIs for applications of all kinds to integrate with and push user data in to create a unique pattern of interactions between applications, contacts, files, sites visited and other resources on/off the device. This stream of information may be used to not only train the LLM, but also provide real-time feedback to applications (directly through an API or messaging scheme or indirectly by injecting text or interacting with an application to drive an outcome.

In one embodiment, MCP and/or application to application communication may be used.

Privacy may be strengthened by optionally having each application encrypt, hash, or tokenize sensitive data before it is shared. When sensitive data needs to be accessed, the user may need to be authenticated (e.g., using biometrics, a PIN, etc.). Each data providing application may provide a method for detokenizing/decrypting, etc. the data once the user has given permission.

Once a user opts in, applications may send anonymized training data to the LLM for processing. The more users interact, the denser the training data becomes allowing for stronger recommendations.

In addition, a running log of interactions or a stack showing the order of interactions along with metadata may be leveraged to allow individual applications to review recent actions on the device to make a self-determination of the next interaction, data that would be useful, etc.

In embodiments, an application may "listen" to conversations (through ambient sounds or from the device) and identify the next action, or may make data available for next application securely. For example, the tone of the conversation may be monitored to detect potential fraud and guard against financial loss. If distress is detected, embodiments may contact authorities, may generate an incoming call to give the person a viable excuse to leave the conversation, etc.

Embodiments may identify the user of personal information and may protect that personal information by masking it in text conversations or by scrubbing / beeping out the audio of the sensitive information.

For example, in step 705, applications on a user electronic device may periodically send tokens to a LLM to train the LLM. For example, the tokens may include contact information, chats, emails, financial data, social media information, etc. In one embodiment, the tokens may be encrypted.

In step 710, the tokens may be used to train the LLM. The LLM may be provided on the user electronic device, may be remote (e.g., be provided in the cloud or on a separate device), or a combination of a local LLM and remote LLM.

In step 715, a first application on the user electronic device may monitor audio and messaging applications on the user electronic device for events.

In step 720, the first application may convert the audio to text as necessary, and may generate a token for the converted text or text from the messaging application.

In one embodiment, the token may be encrypted.

In step 725, the first application may prompt the LLM to predict the next step for the event based on the token.

In step 730, the LLM may return the prediction to the first application.

Examples of such uses are as follows. When a user accesses an application, the application may call an API on the device to retrieve recent user context and related data. This may allow, for example, a messaging application to know that the user is or was involved in a video conferencing call. The messaging application may then use an API to obtain the contact information for the participants in the video conference, which may allow the user to send messages to a participant even though the participant may not be in the user's contact list.

As another example, LLM may allow applications to pass user interactions and data in to allow the system to provide recommended contacts, financial, meeting and other information to the user either directly by the operating system or within the flow of a connected application.

In one embodiment, embodiments may use federated machine learning with homomorphic encryption. Homomorphic Encryption allows for data to be manipulated without decrypting it to increase the security of the system. This can be used to allow unrelated applications to send data to an application or endpoint securely.

Each application may retrieve a public key from the device and send a blob encrypted with that key along with a visible tag to a common system / location on the device. Other applications may check that data to see the most recent interactions, and if the user wishes to retrieve or reference that data, the application / system would use biometrics, PIN or similar step-up authentication before allowing the system to decrypt the blob and provide the data in clear text to the requesting application.

A common public/private key pair may be leveraged by the system. Thus, embodiments may run the data through machine learning algorithm that have been encrypted using the common public key. This allows the system to make recommendations on or off the device without having access to the underlying data.

Federated machine learning using homomorphic encryption may allow users to protect their privacy while, at the same time, allowing the users to send their data to a common app or system service on the device, to a remote machine, to share the data with a peer device, to train a model, or to execute the data against a model. This may allow the applications to send fully encrypted contact, transcript, finance, and other data to a local or remote model to drive the customers next action in another application or even in the real world.

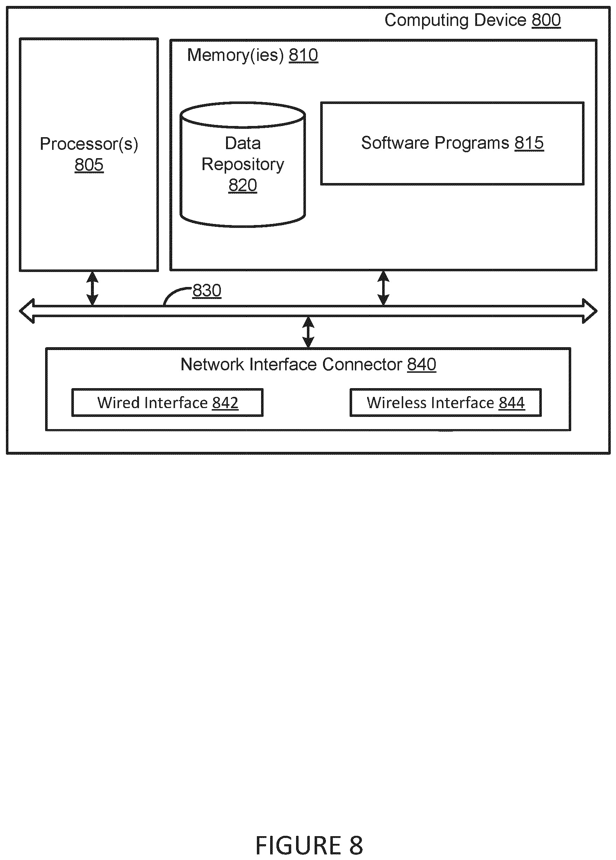

Figure 8 depicts an exemplary computing system for implementing aspects of the present disclosure. Figure 8 depicts exemplary computing device 800. Computing device 800 may represent the system components described herein. Computing device 800 may include processor 805 that may be coupled to memory 810. Memory 810 may include volatile memory. Processor 805 may execute computer-executable program code stored in memory 810, such as software programs 815. Software programs 815 may include one or more of the logical steps disclosed herein as a programmatic instruction, which may be executed by processor 805. Memory 810 may also include data repository 820, which may be nonvolatile memory for data persistence. Processor 805 and memory 810 may be coupled by bus 830. Bus 830 may also be coupled to one or more network interface connectors 840, such as wired network interface 842 or wireless network interface 844. Computing device 800 may also have user interface components, such as a screen for displaying graphical user interfaces and receiving input from the user, a mouse, a keyboard and/or other input/output components (not shown).

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a common process, state information for a first application from the first application executed by an electronic device;
storing, by the common process, the state information;
receiving, by the common process and from a second application executed by the electronic device, a request for the state information; and
providing, by the common process, the state information to the second application.

2. The method of claim 1, wherein the state information comprises information that was last being displayed or accessed by the first application.

3. The method of claim 1, wherein the first application pushes the state information to the common process.

4. The method of claim 1, wherein the common process pulls the state information from the first application.

5. The method of claim 1, wherein the state information is encrypted with a public key for the common process, further comprising:
decrypting, by the common process, the state information with a public key for the common process; and
encrypting, by the common process, the state information with a public key for the second application.

6. The method of claim 1, wherein the common process is executed on the electronic device.

7. The method of claim 1, wherein the common process comprises an interaction service executed in a cloud environment.

8. The method of claim 1, wherein the common process executes a Model Context Protocol (MCP) agent in communication with a MCP server.

9. The method of claim 1, wherein the common process comprises a recommender system.

10. The method of claim 9, further comprising:
prompting, by the recommender system, a large language model with the state information for a recommendation;
wherein the state information provided to the second application comprises the recommendation.

11. The method of claim 1, wherein the state information comprises an identifier for a participant in a conference; and
retrieving, by the common process, contact information for the participant;
wherein the state information provided to the second application comprises the contact information.

12. The method of claim 1, wherein the common process comprises a cloud-based interaction service.

13. The method of claim 1, wherein the first application sends the state information to the common process in response to switching from the first application to the second application.

14. The method of claim 1, wherein the second application pulls the state information from the common process.

15. The method of claim 1, further comprising:
deleting, by the common process, the state information after the state information is provided to the second application.

16. The method of claim 1, wherein the second application consumes the state information.

17. An electronic device, comprising:
a computer processor; and
a memory;
wherein the electronic device is configured to execute a first application, a second application, and a common process, and the common process is configured to receive state information for the first application from the first application, wherein the state information comprises information that was last being displayed or accessed by the first application, to store the state information, to receive a request for the state information from the second application, and to provide the state information to the second application.

18. The electronic device of claim 17, wherein the state information is encrypted with a public key for the common process, and the common process is configured to decrypt the state information with a public key for the common process and to encrypt the state information with a public key for the second application.

19. The electronic device of claim 17, wherein the common process executes a Model Context Protocol (MCP) agent in communication with a MCP server.

20. The electronic device of claim 17, wherein the common process comprises a recommender system, and the recommender system is configured to prompt a large language model with the state information for a recommendation, and the state information provided to the second application comprises the recommendation.
